# EUROPEAN PATENT APPLICATION

(11) **EP 4 838 197 A1**
(43) Date of publication of application: **11.11.2026**
(21) Application number: 25816220.5
(22) Date of filing: 28.05.2025
(51) Int. Cl.: G01N 3/32

(54) **FATIGUE ACCELERATION TESTER FOR BATTERY MODULE OR PACK**

(30) Priority: 28.05.2024 KR 20240069076
(71) Applicant: LG Energy Solution, Ltd., Seoul 07335 (KR)
(72) Inventor: LEE, Ho Joon, Daejeon 34122 (KR); LEE, Chang Je, Daejeon 34122 (KR); BAE, Seung Hwan, Daejeon 34122 (KR)
(74) Representative: Plasseraud IP
(86) International application number: PCT/KR2025/007248
(87) International publication number: WO 2025/249900

(57) **Abstract**

The present invention relates to a fatigue acceleration tester for evaluating durability of a battery module against fatigue failure through repeated expansion and contraction of the battery module, and more specifically, relates to a fatigue acceleration tester capable of implementing reliable fatigue acceleration by simulating repeated actual expansion and contraction, and a method thereof.

According to one example of the present invention, it is possible to simulate an actual swelling phenomenon by pressurizing widthwise sidewalls of a case from the inside to the outside through a plurality of actuators provided along the longitudinal direction of the case. Particularly, it is possible to change the number and height of the actuators, and by independently setting the pressurization length of the individual actuator, it is possible to enhance general versatility.

## Description

### Technical Field

The present invention relates to a fatigue acceleration tester for evaluating durability of a battery module against fatigue failure through repeated expansion and contraction of the battery module, and more specifically, relates to a fatigue acceleration tester capable of implementing reliable fatigue acceleration by simulating repeated actual expansion and contraction, and a method thereof.

### Background Art

Rechargeable secondary batteries are widely used as energy sources for wireless mobile devices. Furthermore, secondary batteries attract attention as energy sources for small vehicles such as electric bicycles and kick scooters as well as for electric vehicles and hybrid electric vehicles, which have been proposed as solutions to address air pollution, and the like caused by existing gasoline vehicles, diesel vehicles, and the like using fossil fuels. Therefore, the types of applications utilizing secondary batteries diversify significantly due to advantages of the secondary batteries, and it is expected that the secondary batteries will be applied to more fields in the future.

Because electric vehicles and the like use high-power electrical energy, multiple battery modules are required per vehicle. In the inside of such a battery module, multiple battery cells are mounted in a module case. Multiple battery modules may be provided to form a single battery pack, and recently, technologies for directly forming a battery pack from multiple battery cells without using a battery module have been developed.

The battery cells provided inside the module case of the battery module or the pack case of the battery pack can experience repeated swelling as the repeated charging and discharging is performed. The repeated swelling repeatedly applies stress to the case, and thus fatigue accumulates at welded portions of the case, whereby phenomena in which the welded portions are broken can occur. Therefore, simulation testing for fatigue evaluation in the welded portions of the case is required.

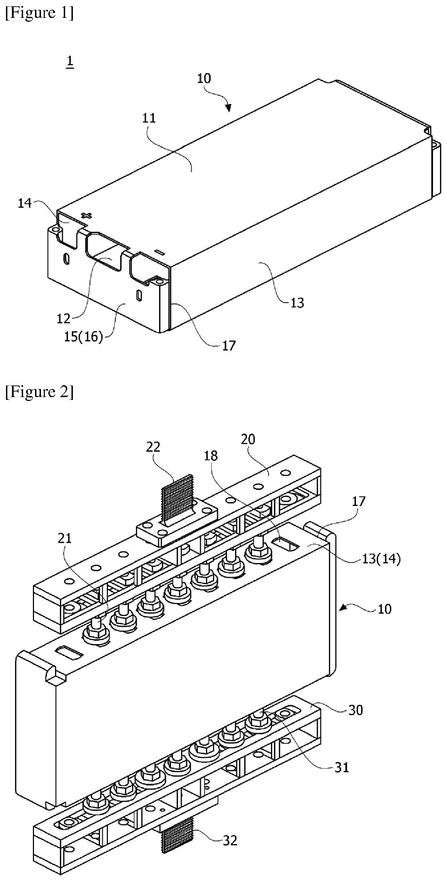

Figure 1 illustrates a battery pack or battery module.

The battery pack or battery module (1) comprises a case (10) accommodating multiple battery cells. The case (10) may be formed in a hexahedral shape, and includes an upper cover (11) and a lower cover (12), where they form upper and lower surfaces of the case (1), respectively. In addition, the case (10) includes sidewalls (13, 14, 15, 15) forming side surfaces of the case (1), where in the case of a rectangular parallelepiped shape, long sidewalls (13, 14) and short sidewalls (15, 16) may be formed.

Terminal connection may be performed through the short sidewalls (15, 16), and the battery cells may be disposed inside the case so that swelling occurs between the opposing long sidewalls (13, 14).

After the four sidewalls (13, 14, 15, 16) and the lower cover (12) are joined, the battery cells are accommodated inside the case (1), and then the upper cover (11) is joined, whereby the pack or module (1) may be assembled.

In the sidewalls (13, 14) where swelling occurs, as one example, the long sidewalls, both ends may be connected to another sidewalls (15, 16), as one example, the short sidewalls, through welded portions (17). That is, the sidewalls (13, 14) can be referred to as plates that both ends are fixed, which can cause fatigue failure of the welded portion (17) by swelling. Consequently, to ensure reliability of the welded portion (17) from fatigue failure, a fatigue failure test is necessary. Specifically, a fatigue acceleration test needs to be performed by applying artificial pressurization to the case.

Figure 2 illustrates one example of a conventional fatigue acceleration tester.

A sample used for the fatigue acceleration test, i.e., the case (1), may be positioned between facing test jigs (20, 30), and the jigs (20, 30) may be provided with connecting parts (22, 32) for connection to a tensile tester. Then, the test jigs (20, 30) may be provided with multiple pressurizing parts (21, 31). The multiple pressurizing parts (21) provided on the upper jig (20) may be coupled to one sidewall (13) where swelling occurs, and the multiple pressurizing parts (31) provided on the lower jig (30) may be coupled to the other sidewall (14) where swelling occurs.

To simulate swelling, as one example, the upper jig (20) can perform repeated movement up and down using a tensile tester, where the pressurizing parts (21, 32) repeatedly pressurize the sidewalls (13, 14) and return. That is, the pressurizing parts perform external pressurization with respect to the sidewalls. Furthermore, since the pressurization is generated through one or both tensile testers, displacements of the multiple pressurizing parts are identical. Moreover, contact surfaces between the pressurizing parts (21, 32) and the sidewalls (13, 14) have planes.

However, swelling in an actual case occurs in the form of pressurization from the inside to the outside, and the displacement due to swelling is smallest at both ends of the sidewall and largest in the center of the sidewall.

For conventional fatigue acceleration tests, multiple pressurizing part penetration holes (18) must be formed separately in the sidewalls (13, 15). Therefore, the sidewalls of the sample inevitably have different physical properties from the sidewalls of the actual case.

For this reason, it is not easy to simulate actual swelling using a conventional fatigue acceleration tester. Therefore, the reliability of the results of the fatigue acceleration test is inevitably reduced.

### Disclosure

### Technical Problem

The present invention aims to solve the problems of conventional fatigue acceleration testers.

Through one example of the present invention, it is intended to provide a fatigue acceleration tester capable of accurately simulating actual swelling by pressurizing it from the inside to the outside, expanding a pressurization area, and performing three-dimensional pressurization.

Through one example of the present invention, it is intended to provide a fatigue acceleration tester capable of accurately simulating actual swelling by implementing multiple pressurizing actuators to independently set and control pressurization displacements.

Through one example of the present invention, it is intended to provide a fatigue acceleration tester capable of flexibly responding to size variation of a test target case.

Through one example of the present invention, it is intended to provide a fatigue acceleration tester capable of effectively controlling variation of pressurization displacements by utilizing a proportional relationship between a rotation speed of a motor and a pressurization displacement of an actuator.

Through one example of the present invention, it is intended to provide a fatigue acceleration tester capable of easily setting and changing a pressurization height of an actuator.

### Technical Solution

To achieve the above-described objects, according to one example of the present invention, a fatigue acceleration tester may be provided, which is characterized by comprising: a base plate; a plurality of motors provided at the bottom of the base plate; a plurality of actuators provided to be positioned inside a case accommodating battery cells at the top of the base plate and provided along the longitudinal direction of the case to correspond to the plurality of motors, respectively; and a drive transmission member penetrating the base plate vertically to transmit rotational displacements of the motors to the actuators, wherein the actuator is provided to pressurize the widthwise sidewalls of the case from the inside to the outside by converting the rotational displacement transmitted through the drive transmission member into a linear pressurization displacement.

It is preferable that the motor is a servo motor capable of precisely controlling a rotation speed and/or a rotation angle. The rotation speed and/or rotation angle and the pressurization displacement have a proportional relationship, thereby enabling to precisely control the pressurization displacement.

It is preferable that a lower cover of the case is seated and fixed to an upper surface of the base plate, and the actuator is seated and fixed to the lower cover. That is, since the case and the actuator may apply pressure to the sidewalls of the case in a fixed state in a horizontal state, it is possible to provide precise and stable pressurization displacements to the case.

It is preferable that a frame supporting the base plate to be spaced apart from the ground is included, and the plurality of motors is fixed and provided to the frame. Particularly, since the motor is provided inside the frame, drive interference of the motor due to external factors can be minimized.

It is preferable that a plurality of drive transmission members is provided to correspond to the motors, respectively, and through-holes through which the plurality of drive transmission members passes vertically are formed on the base plate. The drive transmission members may be provided in a chain form, and since all the drive transmission members, except for their upper portion, are provided inside the frame, operation interference of the drive transmission members due to external factors can be minimized. Furthermore, since the upper portion of the drive transmission members is shielded by an actuator cover to be described below, safety can be ensured.

The actuator may comprise an adjustment plate for adjusting a pressurization height of the actuator by varying a fixed height of the actuator relative to the lower cover of the case.

The actuator may comprise a pressurization plate pressurizing the sidewalls and a screw nut converting a rotational displacement into a linear pressurization displacement to transmit it to the pressurization plate.

It is preferable that in the pressurization plate, a pressurization surface facing the sidewall is formed as a curved surface in the height direction of the sidewall. The sidewalls may be indeed formed in the form of continuous curved surfaces by swelling. Therefore, by forming the pressurization surface as the curved surface, it is possible to effectively simulate actual swelling. Furthermore, it is preferable that an elastic dummy pad is interposed between the pressurization surface and the sidewall. Since pressurization is generated through the elastic pad, it is possible to provide a pressurization force to a wide region.

The pressurization plate and the screw nut are provided on both one side and the other side of the actuator, whereby the actuator may be provided to simultaneously pressurize both widthwise sidewalls of the case. Since in a state where the actuator and the case are fixed to the base plate, pressurization is performed to both sides, it is possible to provide the same pressurization displacement to both sides.

Particularly, it is preferable that the pressurization plate and the screw nut provided on one side of the actuator are symmetrically provided with the pressurization plate and the screw nut provided on the other side, so that both widthwise sidewalls of the case are pressurized with the same pressurization displacement with respect to the rotational displacement transmitted through the drive transmission member.

It may further comprise a controller controlling the motor to repeat forward and reverse rotation for repeated movement between the original position and the pressurization position of the actuator.

The motor rotates forward, as one example, from the pre-pressurization position (original position) of the pressurization plate to the pressurization position, and due to the reverse rotation of the motor, the pressurization plate returns from the pressurization position to the original position. The pressurization plate may be maintained at the pressurization position for a set period.

The controller may precisely control a rotation direction, a rotation speed, a rotation angle, a rotation time point, and a stop time point of the motor through the motor drive. Through this, it is possible to precisely control a pressurization cycle, a pressurization displacement, a pressurization time, a pressurization retention time, and the like.

Particularly, the controller may individually control multiple motors. Furthermore, the controller may each independently control the multiple motors. Therefore, it is possible to precisely simulate actual swelling.

It is preferable that the controller variably controls a rotation angle of the motor so that a magnitude of the pressurization displacement of the actuator is varied. The rotation angle may be 360 degrees or more. Therefore, the controller may variably control the rotation speed of the motor. By precisely setting the motor rotation speed to at least one decimal place, the variable displacement may also be precisely set and controlled.

It may comprise a user interface for inputting the magnitude of the pressurization displacement by each of the plurality of actuators. The magnitude of the pressurization displacement of the individual actuator may be individually input through the user interface.

The controller and the user interface may be implemented through a control panel. If a user sets the variable displacement for each actuator through the user interface, the controller may calculate the motor rotation speed corresponding to the set variable displacement by reflecting the proportional relationship between the variable displacement and the motor rotation speed. The motor rotation may be controlled based on the calculated motor rotation speed.

It may comprise a displacement measurement sensor located on the sidewall outside of the case and sensing the displacement of the sidewall by drive of the actuator. A plurality of displacement measurement sensors may be provided.

It is preferable that the controller compares the magnitudes of the displacement sensed by the displacement measurement sensor and the preset pressurization displacement to correct and control the rotation angle or rotation speed of the motor. For example, in a state where a specific pressurization displacement is set through a specific actuator, the displacement measurement sensor may sense an error of the measured pressurization displacement. To correct the error of the pressurization displacement, the motor rotation speed may be increased or decreased.

A fatigue acceleration tester can be referred to as a device that accelerates and tests the swelling that occurs during the battery's service life. Therefore, the number of swelling times (swelling cycles) that occur during the battery's service life is accelerated in a short period of time to be tested.

In a process of performing an initial swelling cycle using the fatigue acceleration tester, a process of compensating for an error of the pressurization displacement using the displacement measurement sensor may be performed. Thereafter, after the pressurization displacement error is compensated, the swelling cycles may be performed continuously and repeatedly without the error compensation process.

Of course, the error compensation process may be performed every time the swelling cycle is performed, and may also be performed periodically. In this case, it means that the displacement measurement using the displacement measurement sensor and the use of the measured displacement can also be performed only during the error correction process.

It is preferable that the controller controls the plurality of actuators to repeat pressurization and relaxation depending on a preset pressurization displacement in accordance with a set cycle. The swelling cycle time, i.e., the swelling cycle, the number of swelling repetitions, and the total operating time, and the like may be input by the user through the user interface.

It is preferable that the displacement measurement sensor is provided in multiple sensors along a longitudinal direction of the case, and comprises a sensor support member movably fixed to the base plate so that the multiple displacement measurement sensors is mounted and a separation distance to the sidewall is adjusted.

The sensor support member is integrally movable, and thus the plurality of sensors may also be provided to be integrally movable.

It may comprise a support plate provided at the bottom of the base plate to support the plurality of motors.

It may comprise a height adjustment member for adjusting a fixed position of the motor relative to the base plate. Since the support plate is fixed to a frame, it is possible to vary the fixed position of the motor relative to the support plate vertically by varying the fixed position of the motor relative to the base plate vertically.

It may comprise a top stopper and a bottom stopper, fixed and provided on the support plate, and the height adjustment member may be provided to adjust and fix the height of the servo motor between the top stopper and the bottom stopper.

The motor main body may be fixed to the back surface of the support plate. Furthermore, the top stopper and the bottom stopper may be fixed by protruding from the back surface of the support plate. The height adjustment member may be provided so that an insertion length is varied relative to the top stopper and the bottom stopper. Therefore, the height adjustment member is positioned to be spaced apart from the back surface of the support plate backward, and supports the motor main body from the upper and lower surfaces. Through this, it is possible to support the motor more firmly. Particularly, it is possible to prevent the rearward of the motor from sagging downward.

The motor may be provided with two integrally driven sprockets, and the drive transmission member may comprise a dual chain formed integrally to be simultaneously coupled with the two sprockets. One sprocket may be formed doubly, and as a result, a single motor may be provided with two integrally driven dual sprockets. In this case, the drive transmission member may be a single quadruple chain with overlapping dual chains.

### Advantageous Effects

Through one example of the present invention, it is possible to provide a fatigue acceleration tester capable of accurately simulating actual swelling by pressurizing it from the inside to the outside, expanding a pressurization area, and performing three-dimensional pressurization.

Through one example of the present invention, it is possible to provide a fatigue acceleration tester capable of accurately simulating actual swelling by implementing multiple pressurizing actuators to independently set and control pressurization displacements.

Through one example of the present invention, it is possible to provide a fatigue acceleration tester capable of flexibly responding to size variation of a test target case.

Through one example of the present invention, it is possible to provide a fatigue acceleration tester capable of effectively controlling variation of pressurization displacements by utilizing a proportional relationship between a rotation speed of a motor and a pressurization displacement of an actuator.

Through one example of the present invention, it is possible to provide a fatigue acceleration tester capable of easily setting and changing a pressurization height of an actuator.

### Description of Drawings

Figure 1 illustrates one example of an outer shape of a battery pack or battery module,
Figure 2 illustrates one example of a fatigue acceleration test appearance through a conventional fatigue acceleration tester,
Figure 3 illustrates an appearance of a fatigue acceleration tester according to one example of the present invention,
Figure 4 illustrates a coupling appearance of a sample and an actuator,
Figure 5 illustrates a coupling appearance of an actuator, a motor, and a drive transmission member,
Figure 6 illustrates a coupling appearance of a lower cover of a case and an actuator,
Figure 7 illustrates a fixed coupling appearance between a motor and a support plate,
Figure 8 illustrates an appearance of adjusting and fixing a fixed height of a motor in a support plate,
Figure 9 illustrates a cross-sectional appearance of a case sidewall and a pressurization plate before pressurization (swelling), and
Figure 10 illustrates a cross-sectional appearance of a case sidewall and a pressurization plate after pressurization (swelling).

### Best Mode

Hereinafter, with reference to the attached drawings, a fatigue acceleration tester according to one example of the present invention will be described in detail.

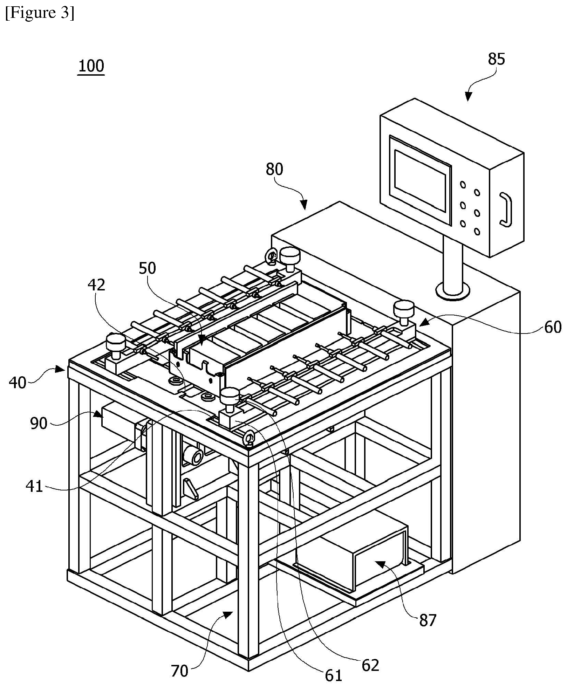

Figure 3 illustrates one example of a fatigue acceleration tester.

As illustrated, the fatigue acceleration tester (100) may be provided in the form of a table, and may comprise a base plate (40) and a frame (70) supporting the base plate (40) against the ground.

A sample, i.e., a case (10) for performing a fatigue acceleration test may be fixed to the upper surface of the base plate (40). In addition, an actuator (50) for pressurizing the side surface of the case (10) from the inside to the outside may be fixed to the upper surface of the base plate (40).

First, the case (10) may be fixed to the base plate (40) through a fixing member, such as a screw, and the actuator (50) may be fixed to the base plate (40) inside the case (10) through a fixing member, such as a screw. Of course, the fixing member may simultaneously fix the actuator and the case (10) to the base plate (40).

The base plate (40) may be provided with multiple displacement measurement sensors (60). The displacement measurement sensor (60) may be provided to contact the outer surface of the side surface of the case (10), and thus may be provided to sense the pressurization displacement generated on the side surface. That is, it may be provided to sense the linear displacement that the actuator (50) pushes to the outside through the inner surface of the side surface of the case.

Meanwhile, a single fatigue acceleration tester needs to be provided so that fatigue acceleration tests are available on cases with various sizes. As one example, to simulate swelling, pressurization to substantially the entire side surface of the case may be required. Therefore, the number of actuators (50) may increase depending on the size of the case, and furthermore, the number of displacement measurement sensors (60) may increase.

The displacement measurement sensor (60) may be fixed at the top of the base plate (40) by a sensor fixing member (61). Particularly, a plurality of displacement measurement sensors (60) may be disposed in a row and fixed to one sensor fixing member (61). The separation distance between the displacement measurement sensor (60) and the outer surface of the side surface, i.e., the outer side surface, of the case, may vary depending on the size of the case. Therefore, the separation distance between the plurality of displacement measurement sensors (60) and the case may be adjusted by adjusting the position of the sensor fixing member (61).

A slot (41) may be formed on the base plate (40). The slot (41) may be formed at the front and back of the base plate (40), respectively, and the sensor fixing member (61) may be linearly moved through the slot. Specifically, the slot is formed long right and left, whereby the sensor fixing member (61) may be moved along the slot. Then, the sensor fixing member (61) may be fixed to the base plate (40) by a fixing knob (62).

It is preferable that the sensor fixing members (61) are provided on the right and left of the actuator (50), respectively. Then, the multiple displacement measurement sensors (60) provided on the left and right sensor fixing members (61) may be provided to face each other. Furthermore, it is preferable that the measured linear displacements are provided to be symmetrical on both sides so that a coaxial axis is formed.

Meanwhile, a through-hole (42) may be formed long front and back at the center of the base plate (40). The case (10) and the actuator (60) may be fixed at the top of the base plate (40) to be symmetrical left and right around the through-hole (42). As described below, the through-hole (42) may be formed so that the drive transmission member penetrates the base plate (40) vertically.

The actuator (50) may be provided so that two case side surfaces facing each other are pressurized and relaxed to the outside. Therefore, it is preferable to provide multiple actuators depending on the size of the case (10). Furthermore, it is preferable that the pressurization displacement generated by a single actuator (50) is equal on both sides. To this end, it is preferable that the actuator (50) and the case (10) are firmly fixed to the base plate (40).

It is preferable that a servo motor (90) is provided at the bottom of the base plate (40). The servo motor (90) is a component generating driving force transmitted to the actuator (50), where the servo motor and the actuator may be provided in a one-to-one correspondence. The servo motor (90) may generate a rotational displacement, and the actuator may be provided to pressurize the sidewalls of the case (10) by converting the transmitted rotational displacement into a linear displacement.

The fatigue acceleration tester (100) may simulate swelling by basically controlling the drive of the servo motor (90). Therefore, it is preferable that a control panel (85) for controlling the operation of the fatigue acceleration tester (100) is provided. The control panel (85) may be provided for a user interface and may perform functions for executing various commands or inputs by the user. The control panel (85) may comprise a display, through which various status information may be displayed. Furthermore, the display may be a touch display, through which various inputs may also be performed.

The control panel (85) may be fixed and provided at the top of one side of the base plate (40) for convenience of use, and an electrical component part (80) may be provided at the bottom of the control panel (85). The electrical component part (80) may be provided in the form of an electrical component box. The control panel (85) or the electrical component part (80) may be provided with a power-supply device, PLC, wiring, and the like.

A logger (87) may be provided at the bottom of the base plate (40), i.e., on the inside of the frame (70). Data related to the fatigue acceleration test, as one example, various records, such as the pressurization cycle, test time, and pressurization displacement, may be stored through the logger.

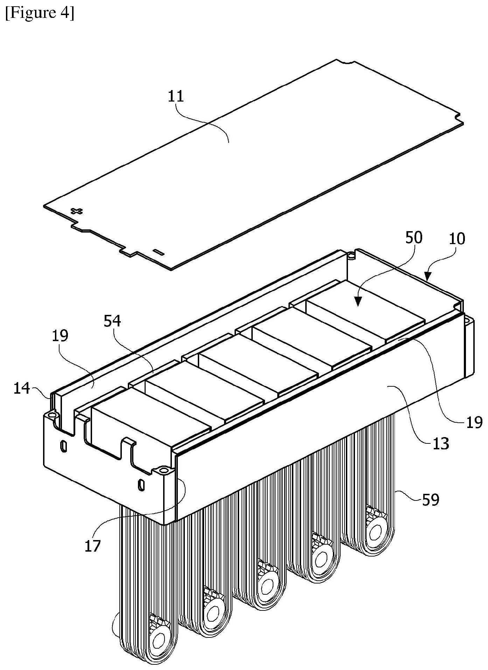

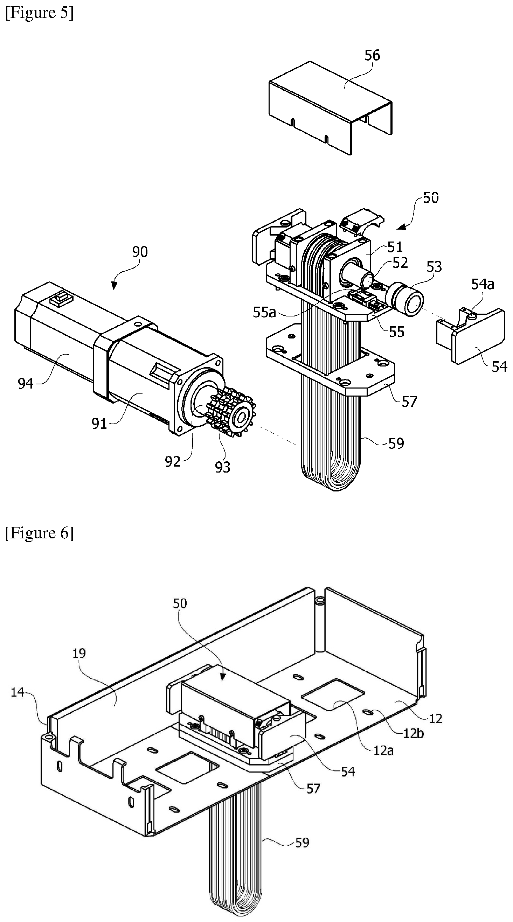

Hereinafter, the actuator (50), the drive transmission member (59), and the motor (90) will be described in detail with reference to Figures 4 to 6.

As illustrated, the side surfaces (13, 14) of the case pressurized for the fatigue acceleration test are identical to those of the actual case. That is, it is preferable that there is no component processed or added for pressurization.

On the other hand, it is preferable that multiple through-holes (12a) are formed on the lower surface (12) of the case. The through-holes (12a) may be formed to correspond to the actuators (50), and the number of through-holes (12a) may be the same as the number of actuators (50). Furthermore, the through-hole (12a) may be referred to as a constitution that the drive transmission member (59) penetrates from the bottom of the case to the top of the case.

Furthermore, a fastening hole (12b) is formed in the lower surface (12a) of the case, where the lower surface (12a) of the case may be coupled and fixed to the base plate (40) through the fastening hole (12b). Particularly, the case (10) and the actuator (50) may be simultaneously fixed through the fastening hole (12b).

Here, the lower surface (12a) of the case is not a constitution substantially stressed by the pressurization of the actuator. Therefore, additional machining of the lower surface of the case is expected to have only a minimal effect on the swelling simulation for the actual swelling phenomenon. On the other hand, since swelling is simulated in a state where the actuator and the case are firmly fixed, it is possible to simulate swelling that matches reality.

The actuator (50) may comprise a pressurization plate (54). The pressurization plate (54) may be formed to have the left-and-right width longer than the up-and-down width, and may be formed in a roughly rectangular shape. Such pressurization plates (54) are disposed sequentially, so that it is possible to substantially pressurize the entire side surfaces (13, 14) of the case.

Upon swelling, the greatest pressurization may occur at the longitudinal center and the height center of the side surfaces, and the pressurization displacement may occur. Furthermore, upon swelling, the pressurization may be continuously generated with respect to the side surfaces. To effectively simulate this swelling, a dummy pad (19) may be provided. The dummy pad (19) is a pad made of an elastic material, which may be interposed between the pressurization plate (54) and the inner side surface of the case. That is, the pressurization plate (54) may pressurize the side surface of the case by pressurizing the dummy pad (19). Through this, it is possible to effectively simulates the matter that pressurization is continuously performed with respect to the side surface.

Furthermore, it is preferable that the pressurization surface of the pressurization plate (53), i.e., the surface facing the side surface (13, 14) of the case, is formed as a curved surface. Particularly, it is preferable to have a curved surface bent in the vertical direction. Through this, it is possible to more effectively simulate actual swelling.

Meanwhile, it is preferable that the pressurization plate (53) is positioned to symmetrically pressurize the side surfaces (13, 14) up and down based on their up-and-down center. As one example, when the size of the case (10) varies, it is preferable that the vertical position of the pressurization plate (53) is adjusted. To this end, an adjustment plate (57) interposed between the actuator (50) and the case lower surface (12) may be provided. By varying the number or thickness of the adjustment plates (57), it is possible to adjust the height of the actuator, i.e., the height of the pressurization plate.

It is preferable that the actuator (50) is formed to be bilaterally symmetrical. That is, it is preferable that the portion facing one sidewall (13) of the case and the portion facing the other sidewall (14) of the case are bilaterally symmetrical. That is, the pressurization plates (53) may be provided on both sides of the actuator (50) to simultaneously pressurize and relax both sidewalls with the same pressurization displacement.

The actuator (50) may comprise a support frame (55) and a drive bracket (51). The support frame (55) can be regarded as a constitution for fixing the actuator (50) to the base plate (40) while supporting the components of the actuator (50), and the drive bracket (51) can be regarded as a constitution for supporting components such as a screw (52) converting the rotational displacement transmitted through the drive transmission member (59) into the linear displacement.

The screws (52) may be formed to protrude from the center of the actuator (50) to the left and right, respectively, and may be provided so that protrusion lengths are varied while rotating depending on the rotational displacement transmitted through the drive transmission member (59). As one example, the screw (52) on the right may be formed with a right-hand thread, and the screw on the left may be formed with a left-hand thread. Therefore, both screws (52) may pressurize them with the same displacement. That is, the same pressurization displacement may be generated on both sides for a single rotational displacement.

Specifically, a screw nut (53) may be interposed between the screw (52) and the pressurization plate (54). When the right-hand thread is formed on the screw (52), the right-hand thread may also be formed inside the screw nut. The screw nut (53) may convert the rotational displacement into the linear displacement, and the transformed linear displacement may be transmitted to the pressurization plate (54) as such. In addition, the screw nut (53) is supported by a linear guide (55a), where the linear guide (55a) may guide the screw nut (53) to be linearly reciprocated. The linear guide (55a) may be supported by the support frame (55) to enable linear movement.

The actuator (50) may comprise an actuator cover (56) covering the entire actuator from the top, except for the pressurization plate (54). The actuator cover (56) prevents dust and other contaminants from flowing inside the actuator, whereby it is possible to perform smooth power transmission and displacement conversion.

At the center of the actuator (50), the drive transmission member (59) is connected to the screws (52) on both the left and right sides. The drive transmission member (59) may be provided in a chain shape to effectively transmit the rotational displacement. A double chain is connected to one screw (52), and thus, the drive transmission member (59) may be a single quadruple chain in which a double chain and a double chain are coupled.

The drive transmission member (59) is provided to transmit the rotational displacement between the motor (90) provided at the bottom of the base plate (40) and the actuator (50) provided at the top of the base plate (40).

It is preferable that the motor (90) is a servo motor capable of controlling the precise rotational displacement, i.e., the rotation angle. The motor (90) may comprise a main body (91) and a motor drive (94) for precisely controlling the rotation angle of the motor (90). The motor drive (94) is provided at the rearward of the main body (91), and a motor shaft (92) is provided at the frontward of the main body (91). A sprocket (93) is provided on the motor shaft (92). The sprocket (93) may be formed double or quadruple. That is, a plurality of sprockets (93) rotates in the same direction at the same angle. In other words, they rotate integrally.

Therefore, by the forward and reverse rotation in which the motor (90) rotates in one direction by a set angle and then returns to its original position, the actuator (50) may simultaneously pressurize them in both directions and then return to its original position. If the forward and reverse rotation of the motor (90) is performed according to a set cycle, the actuator (50) repeats pressurization and relaxation according to the same set cycle. Here, it can be known that variable control of the pressurization displacement of the actuator (50) can be performed through variable control of the rotation angle of the motor (90).

A swelling mechanism using the motor (90), the drive transmission member (59), and the actuator (50) will be described in detail.

Upon implementing swelling of the case (10), the rotational drive of the motor (90) is transmitted to the actuator (50) through the drive transmission member (59). Here, the motor, drive transmission member, and actuator are a one-to-one correspondence, where each may be provided in multiple parts. If the rotational drive is transmitted to the actuator, the actuator may move linearly in the direction where both pressurization plates (54) are spread apart, and pressurize both side surfaces of the frame from the inside to the outside to inflate them.

Upon restitution of the case (10) to its original state, the reverse rotational drive of the motor (90) is transmitted to the actuator (50) through the drive transmission member (59). At this time, the pressurization plate (54) moves in a retreating direction, releases the pressurization force applied to both side surfaces of the frame, and restores the deformation to the original state.

The numbers of motors, actuators, and drive transmission members may be determined depending on the size of the case (10) to be tested. As one example, in a medium-sized case, five sets of motors, actuators, and drive transmission members may be used, and in a large-sized case, seven sets of motors, actuators, and drive transmission members may be used.

Since multiple motors (90) are provided for a single case (10), the rotational amounts, as one example, the rotation speeds, of the respective motors (90) may be set differently. The pressurization displacement of the actuator may vary in proportion to the rotation angle or rotation speed of the motor. As one example, the rotation speed of the motors driving the actuators located at both ends of the case may be set to the lowest, and the rotation speed of the motor driving the actuator located at the center of the case may be set to the highest. Of course, the motor rotation speed may be referred to as the rotation speed in one cycle of pressurization. Therefore, in the case sidewall, the central portion expands more than both ends, thereby causing the case to swell into a jar-like shape, whereby it is possible to simulate battery swelling. Through this, it is possible to perform fatigue failure testing of the welded portion of the frame (10) very quickly and precisely. As one example, it is possible to quickly and precisely verify whether fatigue failure occurs within the expected lifespan of the battery.

Meanwhile, changes in the size of the case (10) may require not only changes in the number of motors and actuators but also changes in the pressurization position. This is because the height of the side surfaces (13, 14) of the case (10) may also vary depending on the case size. Due to the characteristics of the motors and actuators, which are installed in fixed locations, changing the pressurization position may not be easy.

As previously described, the fixed position of the actuator can be varied using the adjustment plate (57). At this time, if the motor position is fixed, the length of the drive transmission member must be varied. However, it is not easy to change the length of the drive transmission member or to switch to another drive transmission member each time the pressurization height is changed. Furthermore, decoupling and recoupling of the drive transmission member and actuator is very cumbersome and laborious.

Therefore, a solution capable of adjusting the pressurization position, i.e., the pressurization height very easily needs to be devised.

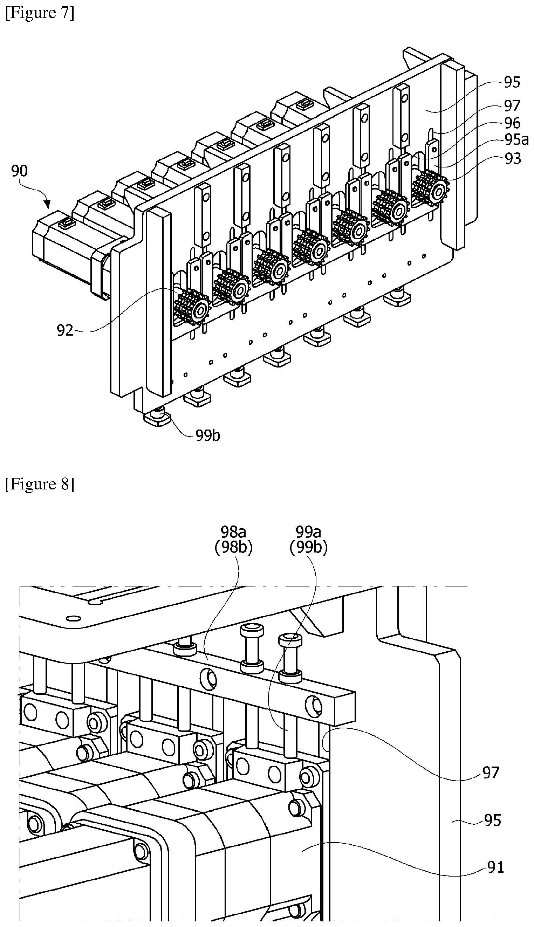

Hereinafter, the fixed structure and height-variable structure of the motor (90) will be described in detail with reference to Figures 7 and 8.

A plurality of motors (90) and a support plate (95) supporting the motors may be provided at the bottom of the base plate (40). The support plate (95) may be fixed to the frame (70).

A through-hole (96) through which the motor shaft passes may be formed in the support plate (95). The motor main body (91) may be positioned on one side of the through-hole (96), and the motor sprocket (93) may be positioned on the other side. As the motor mounting position varies, the height of the shaft (92) varies. Therefore, it is preferable that the through-hole (96) is formed in an elongated long hole shape in the vertical direction so that the height of the motor can be varied.

A sprocket (93) is positioned on the front surface of the support plate (95), and the motor main body (91) is fixed to the back surface using a fixing member, such as a screw. In the support plate (95), a slot (97) through which the fixing member passes may be formed in the vertical direction. In addition, an auxiliary plate (95a) may be provided on the front surface of the support plate (95).

The motor main body (91) may be fixed to the back surface of the support plate (95) using screws or bolts, and the like at four locations on the top, bottom, left, and right, where the screws or bolts penetrate the main body (91), the slot (97), and the auxiliary plate (95a), whereby the motor (91) may be fixed. As one example, in a state where the bolts are loosened, the motor main body (91), bolts, and auxiliary plate (95a) are moved up and down, whereby the height may be set, and then, by tightening the bolts, the fixed height of the motor may be varied and fixed.

Furthermore, a top stopper (98a) and a bottom stopper (98b), for further securing the motor (90) and limiting the variable height, may be provided on the back surface of the support plate (95).

A height adjustment member (99a) may be provided between the top stopper (98a) and the upper surface of the motor main body (91), and a height adjustment member (99b) may also be provided between the bottom stopper (98b) and the lower surface of the motor main body (91).

The top height adjustment member (99a) may be provided so that the insertion length relative to the top stopper (98a) is adjusted, and the bottom height adjustment member (99b) may be provided so that the insertion length relative to the bottom stopper (98b) is adjusted. The insertion lengths may be adjusted if the height adjustment members are rotated. Therefore, by adjusting the insertion lengths of the height adjustment members (99a, 99b), the position where the height adjustment members support the main body (91) at the upper and lower portions may be varied. Particularly, the bottom height adjustment member (99b) may perform the function supporting the motor main body (91) with respect to the frame (70).

The above-described motor fixing structure may facilitate height adjustment without completely separating the motor from the support plate (95). Furthermore, the front surface of the motor main body may be fixed to the back surface of the support plate, and the rearward upper and lower surfaces of the motor main body may each be fixed at positions spaced apart from the support plate (95). Therefore, the support of the motor may be firmly performed.

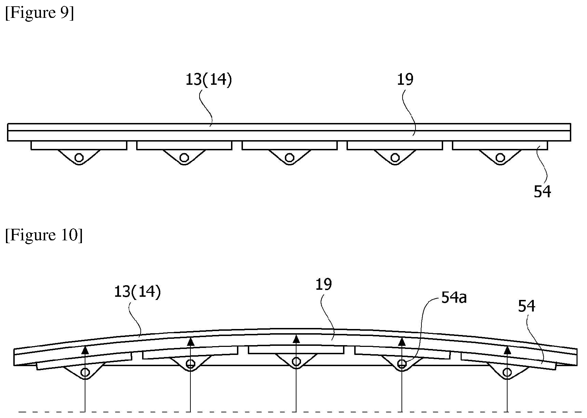

Figure 9 illustrates a cross-sectional appearance of a case side surface before swelling, and Figure 10 illustrates a cross-sectional appearance of a case side surface after swelling.

As illustrated, the pressurization plate (4) has a rectangular shape elongated from side to side, so that multiple pressurization plates (4) may be in surface contact with substantially the entire sidewalls (13, 14) through the dummy pads (19) to pressurize them.

Upon swelling, the pressurization displacement of the centrally located pressurization plate may be set to be the greatest, with the pressurization displacements of the pressurization plates decreasing toward both sides. That is, it is possible to simulate an aspect of deformation into a curved surface with greater accuracy by setting the pressurization displacement differently for each pressurization plate.

In addition, the dummy pads (19) prevent occurrence of non-contact regions between the pressurization plate and the sidewalls, whereby it is possible to mitigate discontinuities in the swelling curved surface.

Furthermore, the vertical curvature radius of the frame side surface upon swelling may also be effectively simulated through the upper and lower curved surfaces of the pressurization plate. The curvature radius of such frame upper and lower curved surfaces may be optimized through structural analyses and actual measurements.

Meanwhile, swelling may occur in the form of left and right curved surface shapes with respect to the side surfaces (13, 14). In this instance, the pressurization displacements at the left and right ends may vary based on one pressurization plate, as one example, the pressurization plate located on both sides, rather than the center. Specifically, the pressurization displacement occurs at the center of the pressurization plate, but when the pressurization plate does not rotate with respect to the center, discontinuous pressurization regions may be generated very wide.

Therefore, it is preferable that the pressurization plate is provided to be rotatable with respect to the center. That is, it is preferable that the pressurization plate is provided to be rotatable left and right at a certain angle with respect to the vertical axis. To this end, it is preferable that a rotational axis (54a) is provided at the rearward center of the pressurization plate. It would be preferable that setting criteria or measurement criteria of pressurization displacements are substantially positions corresponding to rotational axes of pressurization plates.

### Industrial Applicability

It is described in the Detailed Description of Invention.

## Claims

1. A fatigue acceleration tester, **characterized by** comprising:
a base plate;
a plurality of motors provided at the bottom of the base plate;
a plurality of actuators provided to be positioned inside a case accommodating battery cells at the top of the base plate and provided along the longitudinal direction of the case to correspond to the plurality of motors, respectively; and
a drive transmission member penetrating the base plate vertically to transmit rotational displacements of the motors to the actuators,
wherein the actuator is provided to pressurize the widthwise sidewalls of the case from the inside to the outside by converting the rotational displacement transmitted through the drive transmission member into a linear pressurization displacement.

2. The fatigue acceleration tester according to claim 1, **characterized in that**
a lower cover of the case is seated and fixed to an upper surface of the base plate, and the actuator is seated and fixed to the lower cover.

3. The fatigue acceleration tester according to claim 2, **characterized in that**
a frame supporting the base plate to be spaced apart from the ground is included, and the plurality of motors is fixed and provided to the frame.

4. The fatigue acceleration tester according to claim 2, **characterized in that**
a plurality of drive transmission members is provided to correspond to the motors, respectively, and through-holes through which the plurality of drive transmission members passes vertically are formed on the base plate.

5. The fatigue acceleration tester according to claim 2, **characterized in that**
the actuator comprises an adjustment plate for adjusting a pressurization height of the actuator by varying a fixed height of the actuator relative to the lower cover.

6. The fatigue acceleration tester according to claim 1, **characterized in that**
the actuator comprises a pressurization plate pressurizing the sidewalls and a screw nut converting a rotational displacement into a linear pressurization displacement to transmit it to the pressurization plate.

7. The fatigue acceleration tester according to claim 6, **characterized in that**
in the pressurization plate, a pressurization surface facing the sidewall is formed as a curved surface in the height direction of the sidewall, and an elastic dummy pad is interposed between the pressurization surface and the sidewall.

8. The fatigue acceleration tester according to claim 6, **characterized in that**
the pressurization plate and the screw nut are provided on both one side and the other side of the actuator, whereby the actuator is provided to simultaneously pressurize both widthwise sidewalls of the case.

9. The fatigue acceleration tester according to claim 8, **characterized in that**
the pressurization plate and the screw nut provided on one side of the actuator are symmetrically provided with the pressurization plate and the screw nut provided on the other side, so that both widthwise sidewalls of the case are pressurized with the same pressurization displacement with respect to the rotational displacement transmitted through the drive transmission member.

10. The fatigue acceleration tester according to claim 1, **characterized by** comprising
a controller controlling the motor to repeat forward and reverse rotation for repeated movement between the original position and the pressurization position of the actuator.

11. The fatigue acceleration tester according to claim 10, **characterized in that**
the controller variably controls a rotation angle of the motor so that a magnitude of the pressurization displacement of the actuator is varied.

12. The fatigue acceleration tester according to claim 11, **characterized by** comprising
a user interface for individually inputting the magnitude of the pressurization displacement by each of the plurality of actuators.

13. The fatigue acceleration tester according to claim 11, **characterized by** comprising
a displacement measurement sensor located on the sidewall outside of the case and sensing the displacement of the sidewall by drive of the actuator.

14. The fatigue acceleration tester according to claim 13, **characterized in that**
the controller compares the magnitudes of the displacement sensed by the displacement measurement sensor and the preset pressurization displacement to correct and control the rotation angle of the motor.

15. The fatigue acceleration tester according to claim 13, **characterized in that**
the controller controls the plurality of actuators to repeat pressurization and relaxation depending on a preset pressurization displacement in accordance with a set cycle.

16. The fatigue acceleration tester according to claim 13, **characterized in that**
the displacement measurement sensor is provided in multiple sensors along a longitudinal direction of the case, and comprises a sensor support member movably fixed to the base plate so that the multiple displacement measurement sensors are mounted and a separation distance to the sidewall is adjusted.

17. The fatigue acceleration tester according to claim 1, **characterized by** comprising
a support plate provided at the bottom of the base plate to support the plurality of motors.

18. The fatigue acceleration tester according to claim 17, **characterized by** comprising
a height adjustment member for adjusting a fixed position of the motor relative to the base plate.

19. The fatigue acceleration tester according to claim 18, **characterized in that**
a top stopper and a bottom stopper, fixed and provided on the support plate, are included, and the height adjustment member is provided to adjust and fix the height of the motor between the top stopper and the bottom stopper.

20. The fatigue acceleration tester according to claim 16, **characterized in that**
the motor is provided with two integrally driven sprockets, and the drive transmission member comprises a dual chain formed integrally to be simultaneously coupled with the two sprockets.
